# EUROPÄISCHE PATENTSCHRIFT

(11) **EP 0 836 924 B1**
(45) Veröffentlichungstag und Bekanntmachung des Hinweises auf die Patenterteilung: **13.08.2003**
(21) Anmeldenummer: 97115150.1
(22) Anmeldetag: 02.09.1997
(51) Int. Cl.: B29C 45/17

(54) **Verfahren und Vorrichtung zur Herstellung eines Kunststoffteiles mit einem im wesentlichen abgeschlossenen Hohlraum**
Method and device for producing plastic parts with essentially closed cavity
Procédé et dispositif pour la fabrication d'une pièce en matière plastique avec un espace creux pratiquement fermé

(30) Priorität: 02.09.1996 DE 19635485; 05.08.1997 DE 19733826; 01.09.1997 DE 19738057
(43) Veröffentlichungstag der Anmeldung: 22.04.1998
(73) Patentinhaber: Wilmsen, Michael, 76199 Karlsruhe (DE)
(72) Erfinder: Wilmsen, Michael, 76199 Karlsruhe (DE)
(74) Vertreter: Müller, Enno, Dipl.-Ing.

(56) Entgegenhaltungen:
- US-A- 5 090 886
- US-A- 5 284 429
- US-A- 5 318 433

## Beschreibung

Die Erfindung betrifft zunächst ein Verfahren zur Herstellung eines Kunststoffteiles nach Merkmalen des Oberbegriffes des Anspruches 1.

Darüber hinaus betrifft die Erfindung auch eine Vorrichtung zur Herstellung eines Kunststoffteiles nach den Merkmalen des Oberbegriffes des Anspruches 7.

Entsprechende Verfahren sind bereits in verschiedener Hinsicht bekannt geworden. Es wird zum Stand der Technik bspw. auf die EP A2 283 207 und die US PS 4 943 407 verwiesen. Darüber ist zum Stand der Technik auf die US PS 5284429 zu verweisen. Aus vorgenannten Stand der Technik ist ein Verfahren zur Herstellung eines Kunststoffteiles im Spritzgießverfahren bekannt, dass einen abgeschlossenen Hohlraum aufweist. Durch eine Düse wird eine druckbeaufschlagte, fließfähige Kunststoffschmelze in das Innere des Formhohlraumes eingespritzt. Ein Gas wird zur Ausbildung des Hohlraumes darüber hinaus eingedüst. Die Kunststoffschmelze durchsetzt nach der Düse zunächst einen Anguß. Danach wird sie über eine Scherstelle geleitet.

Entsprechend ist hieraus auch eine diesbezügliche Vorrichtung bekannt.

Hinsichtlich Verfahren und Vorrichtung stellt sich gegenüber dem genannten Stand der Technik die Aufgabe, bei einem aus einem thermoplastischen Elastomer bestehenden Kunststoff einen im Wesentlichen abgeschlossenen Hohlkörper an einem Kunststoffteil auszubilden bei qualitativ vorteilhafter und reproduzierbarer Herstellung. Eine entsprechende Vorrichtung soll gleichfalls angegeben werden.

Diese technischen Aufgaben sind zunächst und im Wesentlichen bei den Gegenständen der Ansprüche 1 und 7 gelöst.

Überraschend hat sich gezeigt, dass mit Durchsetzung der Scherstelle von Kunststoffschmelze und Fluid erfolgt. Überraschend hat sich gezeigt, daß mit dem angegebenen Verfahren ein derartiges Kunststoffteil mit einem geschlossenen Hohlraum auch aus einem thermoplastischen Elastomer gefertigt werden kann, wobei auch hohen Qualitätsansprüchen genügt wird. Insbesondere wird eine gewünschte Falten- und Schlierenfreiheit im wesentlichen erreicht. Das Durchströmen der genannten Scherstelle erfolgt zwischen einem Angußteil und einer Angußmündung. Es ist nicht in Einzelheit bekannt, worauf die Vorteilhaftigkeit des Verfahrens genau zurückzuführen ist. Es wird jedoch davon ausgegangen, daß die Querschnittsverminderung in der Scherstelle zusammen mit dem rohrartigen Anpressen der Kunststoffschmelze im Bereich der Scherstelle an die Scherstellenwände für eine so weitgehend vorteilhafte Durchmischung sorgt, daß die genannten hohen Qualitätskriterien erreichbar sind. Die Scherstelle ist zusätzlich zu dem Anguß und der Angußmündung ausgebildet. Hinsichtlich der Scherstelle ist es im weiteren vorteilhaft, daß eine sehr wesentliche Querschnittsreduktion des Stromes der Kunststoffschmelze vorgenommen wird. Bevorzugt ist die Reduktion bei 1:20 bis zu 1:50, weiter bevorzugt bei etwa 1:40. Vorteilhaft ist auch, wenn der Anguß ausgehend von einer üblichen Querschnittsfläche eine kontinuierliche Verjüngung bis zur Scherstelle aufweist. Je nach Art der Entformung kann der Anguß sich, ausgehend von der Maschinendüse, zunächst erweitern und erst danach verjüngen. Dabei kann der Erweiterungsabschnitt im Verhältnis zu dem Verjüngungsabschnitt etwa ein Verhältnis von etwa 10:2 aufweisen. Auch kann der genannte Verjüngungsabschnitt gegenüber dem Erweiterungsabschnitt abgewinkelt insbesondere um 90° abgewinkelt verlaufen. Im weiteren ist es auch vorteilhaft, wenn innerhalb der Scherstelle, bezogen auf eine Strömungsausbreitung vor und hinter der Scherstelle, eine Wendung um ca. 90° erfolgt, wie dies weiter unten noch näher erläutert ist. Auch ist von Bedeutung, daß das Volumen der Scherstelle, bezogen im wesentlichen auf deren kleinsten Durchmesser und die hiermit verbundenen Strecke, relativ gering ist. Bspw. im Bereich von 1 bis 10 mm². Dies ist natürlich auch abhängig von dem zu spritzenden Teil. Neben der bereits erwähnten Möglichkeit, das Fluid bzw. ein Gas wie etwa Stickstoff, bereits im Bereich der Maschinendüse einzudüsen, kann auch vorgesehen sein, daß die Eindüsung im Bereich einer Werkzeugdüse vorgenommen wird. Die Werkzeugdüse ist üblicherweise wesentlich näher an der Scherstelle angeordnet, bezogen auf die vorbeschriebene Ausführung etwa zugeordnet dem Richtungsänderungsbereich im Anguß. Auch kann unmittelbar aus der Maschinendüse kurz vor der Scherstelle das Fluid eingedüst werden. Dies insbesondere bezogen auf eine Heißkanalausführung. Soweit weiter vorstehend ausgeführt ist, daß das Fluid und die Kunststoffschmelze die Scherstelle gleichzeitig durchsetzen, entspricht dies den Verhältnissen nach Beginn des Spritzgießens. Im Hinblick auf den Beginn des Spritzgießens kann zunächst vorgesehen sein, daß die Gaseindüsung und die Einspritzung der Kunststoffschmelze etwa gleichzeitig erfolgen. Im weiteren ist es auch möglich, daß zunächst das Gas eingedüst wird und sodann die Kunststoffschmelze in den Anguß eingespritzt wird. Weiter ist es auch im Rahmen der Erfindung möglich, daß zunächst die Kunststoffschmelze eingespritzt wird und sodann das Gas eingedüst wird, wobei jedoch die Kunststoffschmelze den Formhohlraum noch nicht oder nicht in einem wesentlichen Ausmaß erreicht haben darf. Im weiteren ist es im Hinblick auf ein Ende des Spritzvorganges auch bevorzugt, daß der Gasdruck länger stehen bleibt. Hierzu kann auch eine Rückströmsperre nahe der Scherstelle vorteilhaft sein. Diese Maßnahme ist insbesondere auch im Zusammenhang mit einer Ausführung als Heißkanal von Bedeutung. Soweit das Gas nach der Kunststoffschmelze eingedüst wird, bedeutet dies in zeitlicher Hinsicht etwa einen Abstand von 0,3 bis 0,5 Sekunden. Hinsichtlich der Scherstelle wird im weiteren noch vorgeschlagen, daß diese innerhalb der Kavität angeordnet ist. Bspw. an einem Übergang der Kavität bezogen auf das gefertigte Kunststoffteil von einem ersten Teilabschnitt des Kunststoffteils zu einem zweiten Teilabschnitt des Kunststoffteiles. Das Gas muß zwar jeweils den Weg über die Scherstelle nehmen. Diesbezüglich ist die Kavität geeignet ausgebildet bzw. die Fluiddüse auch bei Anordnung der Scherstelle innerhalb der Kavität geeignet räumlich nahe dazu angeordnet.. Die Kunststoffschmelze muß jedoch nicht über einen räumlich hierzu nahen Anguß eingebracht werden. Sie kann auch über andere Angüsse in den Werkzeuhohlgraum, d.h. die Kavität gelangen.

Vorrichtungmäßig kann die Scherstelle zwischen dem Angußhohlraum und der Angußmündung ausgebildet sein. Darüber hinaus schlägt aber eine bevorzugte Ausgestaltung auch vor, daß die Scherstelle in der Kavität ausgebildet ist. Etwa am Übergang zwischen einem ohne Hohlraum und einem mit Hohlraum ausgebildeten Teilabschnitt des zu spritzenden Kunststoffteiles. Hierbei ist auch bevorzugt die Fluiddüse in die Kavität mündend angeordnet. Im weiteren kann, insbesondere bei einer Ausgestaltung, bei welcher die Scherstelle zwischen dem Angußhohlraum und der Angußmündung ausgebildet ist, die Maschinendüse die Fluiddüse sein. Auch kann die Werkzeugdüse die Fluiddüse sein. Zur Einspritzung kann ein Kaltkanal oder Heißkanal ausgebildet sein.

Nachstehend ist die Erfindung desweiteren anhand der beigefügten Zeichnung, die jedoch lediglich ein Ausführungsbeispiel darstellt, erläutert.

Hierbei zeigt:
- Fig. 1: eine schematische Seitenansicht eines Eingußkanals mit Scherstelle;
- Fig. 2: eine Draufsicht auf den Gegenstand gemäß Fig.1, gesehen etwa in der Ebene II-II;
- Fig. 3: eine schematische alternative Ausgestaltung einer Maschinendüse, als Heißkanal;
- Fig. 4: eine Einzeldarstellung der Maschinendüse;
- Fig. 5: eine vergrößerte Einzeldarstellung des Angusses mit Scherstelle;
- Fig. 6: einen Querschnitt durch ein schematisch dargestelltes Werkzeug, geschnitten entlang der Linie VI-VI in Fig. 7, mit darin gespritztem Kunststoffteil, wobei die Scherstelle innerhalb der Kavität angeordnet ist;
- Fig. 7: eine Draufsicht auf den Gegenstand gemäß Fig. 6;
- Fig. 8: eine Seitenansicht eines Kunststoffteils mit daran angespritztem, abstehenden Teilbereich, welcher den Hohlraum aufweist; und
- Fig. 9: eine Draufsicht auf den Gegenstand gemäß Fig. 8.

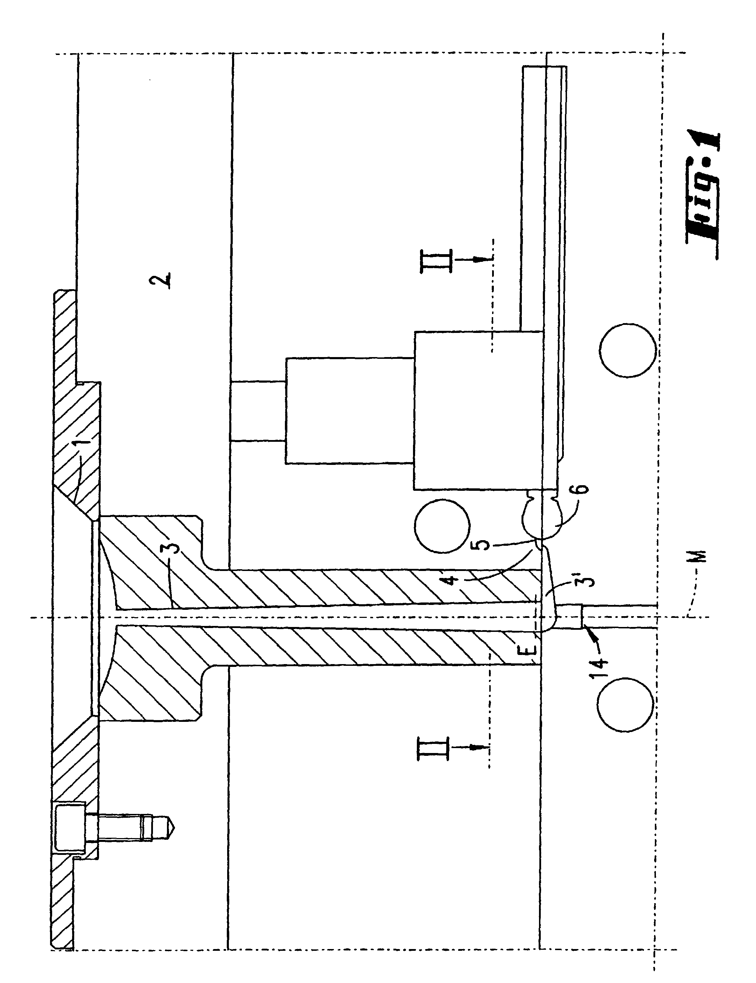

Dargestellt und beschrieben ist, zunächst mit Bezug zur Fig. 1, eine schematische Darstellung einer Vorrichtung zur Herstellung eines Kunststoffteiles im Gasinnendruck-Kunststoffspritzgießverfahren.

Hinsichtlich der Kunststoffspritzgießmaschine ist schematisch ein Anlagebereich 1 einer Maschinendüse dargestellt, an welche sich, in einem Werkzeug 2, ein Anguß 3, hier als sogenannter Kaltkanal ausgebildet, anschließt. Der Anguß 3 erweitert sich zunächst, ausgehend von dem Anlagebereich 1 bis etwa hin zu einem Bereich, der durch die Ebene E angedeutet ist. Der Anguß weist insoweit auch einen geradlinigen Verlauf auf, in geradliniger Ausrichtung an einer Maschinendüsenachse M. Im weiteren verjüngt sich der Anguß 3 bis zu einer Scherstelle 4, welche in eine Angußmündung 5 übergeht. Die Scherstelle 4 ist entsprechend zwischen der Mündung der Maschinendüse und der Kavität ausgebildet.

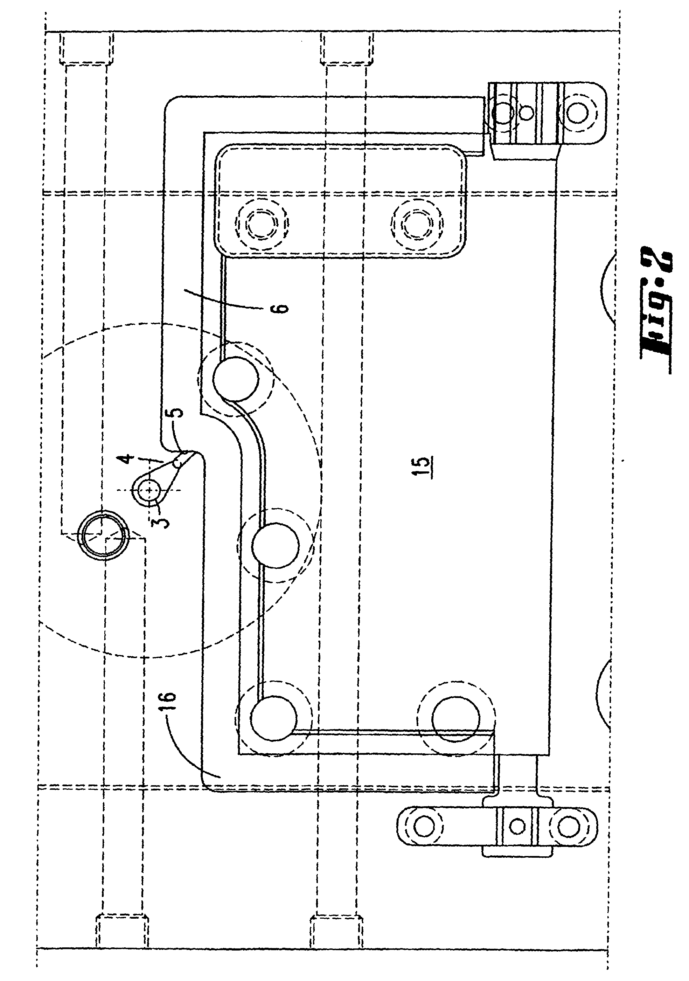

Wie insbesondere auch aus einem Vergleich der Fig. 1 und 2 ersichtlich, ist die Scherstelle 4 im wesentlichen als Rundumverengung ausgebildet. Beim Ausführungsbeispiel beträgt eine Querschnittsstelle der Scherstelle 4 etwa 1 mm², während die Querschnittsfläche im Bereich einer Ebene E, also etwa im größten Bereich des Angusses 3, etwa 40 mm² beträgt. Hier ist anzumerken, daß die Schnittebene II-II tatsächlich etwas tiefer liegt, als in der Zeichnung dargestellt, was aus Übersichtsgründen vorgenommen wurde. Im Anschluß an die Scherstelle 4 bleibt der Querschnitt im wesentlichen gleich bis zur Angußmündung 5. Bevorzugt ist der Querschnitt hier konstant. Von der Angußmündung 5 wird der Kunststoff in die Kavität 6 eingespritzt.

In Fig. 2 ist beispielhaft als hier hergestelltes Teil ein Klappenkörper 15 zu erkennen. Dieser besitzt eine aus einem thermoplastischen Elastomer gebildete Dichtlippe 16, welche im einzelnen nach dem hier beschriebenen Verfahren, im Gasinnendruckverfahren unter Ausbildung eines Hohlraums, gespritzt wird.

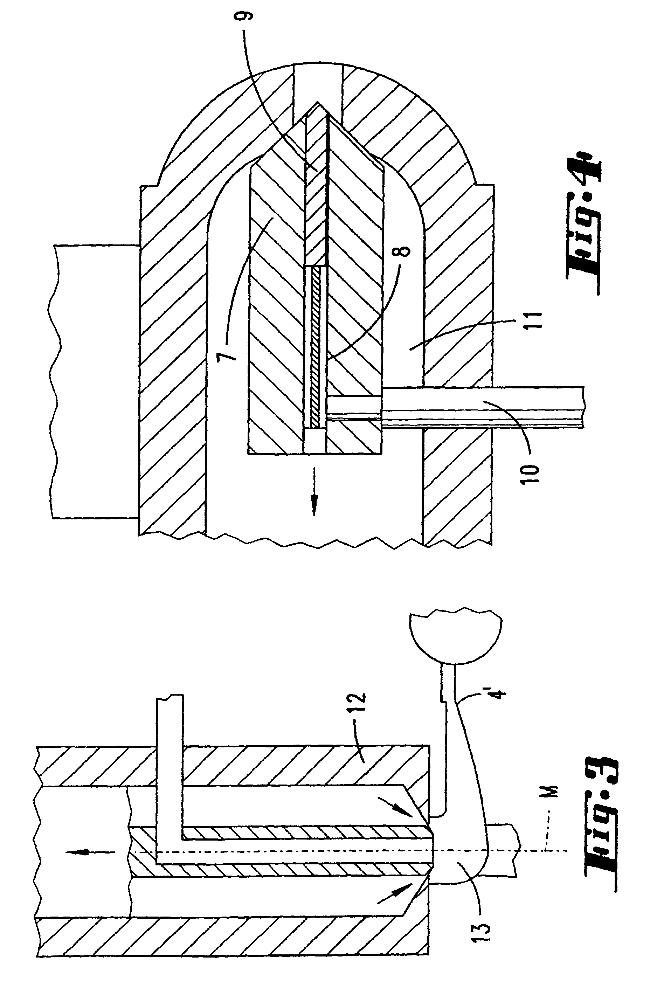

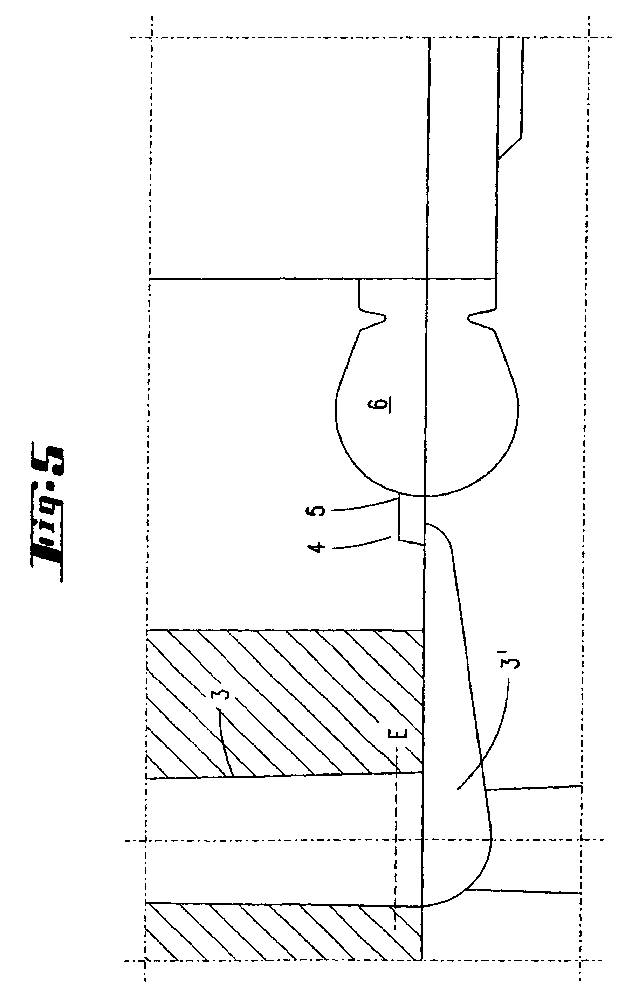

Beim Ausführungsbeispiel der Fig. 1 und 2 erfolgt die Eindüsung des Gases gleichfalls durch die Maschinendüse. Die Maschinendüse ist in weiterer Einzelheit in Fig. 4 dargestellt. Es handelt sich hier grundsätzlich um eine sogenannte "Fuchslocher-Düse".

Eine Düsennadel 7 weist einen Hohlraum 8 auf, mit einer Verschlußnadel 9. Die Verschlußnadel 9 besitzt im Hinblick auf den kreisförmigen Hohlraum 8 eine geringfügige Abflachung, so daß sich beim Ausführungsbeispiel ein Spalt von 0,02 mm einstellt. Durch Bewegen der Maschinendüse 7 insgesamt kann eine Öffnungsstellung oder, wie dargestellt, eine Verschlußstellung erreicht werden. Über eine Leitung 10 ist der Hohlraum 8 mit einem Gasvorrat verbunden. Die Kunststoffschmelze 11 umströmt die Düsennadel 7.

Fig. 3 dient insbesondere zur Erläuterung der Erfindung im Zusammenhang mit einer Heißkanalausbildung. Hierbei ist unmittelbar anschließend an den Heißkanal 12 ein Anguß 13 ausgebildet, welcher sich nach einer Umleitung um 90° sogleich zu der Scherstelle 4' hin verjüngt. Der Heißkanal ist prinzipiell wie die Maschinendüse gemäß Fig. 4 ausgebildet. Im übrigen sind im wesentlichen gleiche Verhältnisse gegeben, wie zuvor im Hinblick auf die Fig. 1 und 2 erläutert.

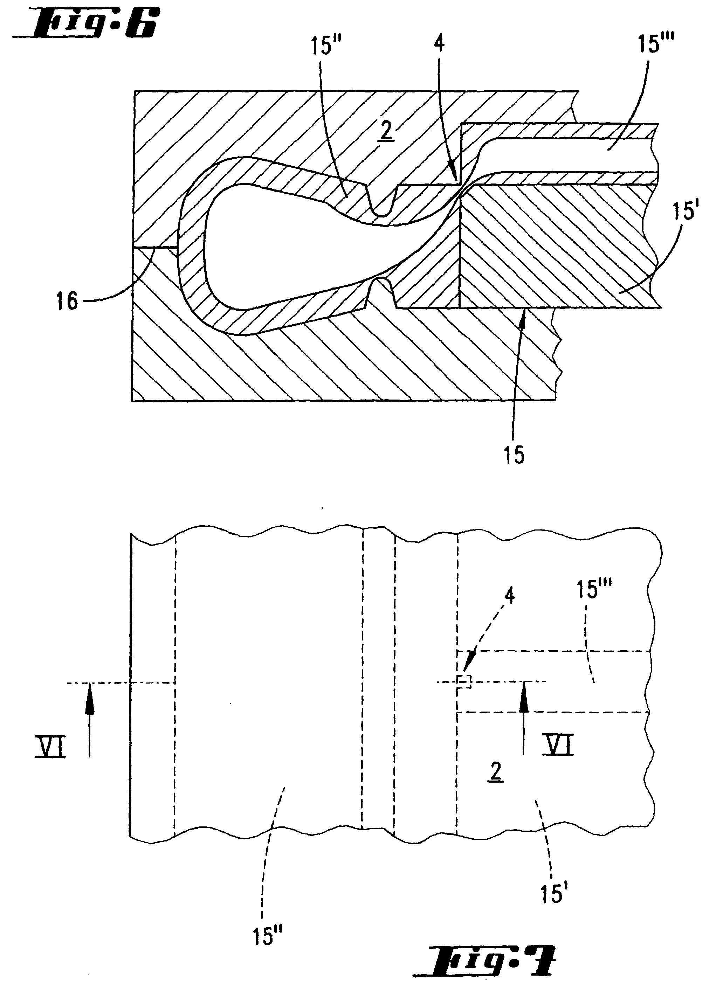

Im Hinblick auf die in Fig. 2 erläuterten Geometrien des Angusses und der Scherstelle ist dies in Fig. 5 nochmals im einzelnen in vergrößerter Form dargestellt. Wie ersichtlich, erfolgt hier im Zusammenhang mit der Scherstelle 4 im wesentlichen auch eine 90° - Wendung der Kunststoffschmelze, bezüglich des Angußabschnittes 3' im Vergleich zu der Angußmündung 5.

Im übrigen ist ersichtlich, daß die Scherstelle innerhalb der Formteiltrennung ausgebildet ist. Abweichend hiervon kann aber in an sich bekannter Form die Scherstelle auch als Tunnelanguß bspw. ausgebildet sein.

Es kann auch vorgesehen sein, wie weiter oben schon angesprochen, daß die Eindüsung des Gases unabhängig der Maschinendüse erfolgt, nämlich über eine Werkzeugdüse. Diese kann beim Ausführungsbeispiel etwa an der Stelle 14 (vgl. Fig. 1) angeordnet sein.

Soweit vorstehend auf einen im wesentlichen abgeschlossenen Hohlraum Bezug genommen ist, soll dies bedeuten, daß, wie an sich bekannt, das Gasinnendruckverfahren zur Ausbildung von Hohlräumen im Kunststoffspritzverfahren genutzt wird. Da aber in der Regel das Gas auch wieder aus dem Hohlraum entweicht, besitzt dieser üblicherweise eine Öffnung. Er ist also in der Regel nicht vollständig oder hermetisch geschlossen. Es ist allerdings möglich, und im Rahmen der Erfindung auch als Ausgestaltung von Interesse, daß eine solche Öffnung in einem weiteren Spritzgießvorgang noch verschlossen wird.

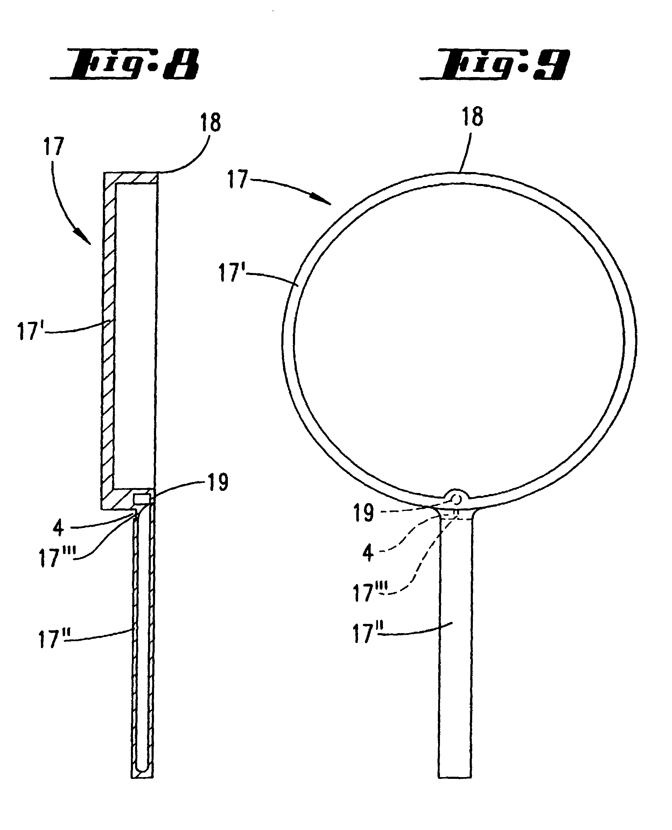

In Fig. 6 ist eine schematische Querschnittsdarstellung durch ein Werkzeug 2 mit einer Teilungsfuge 16 dargestellt. Der hierin beispielhaft dargestellte, gespritzte Klappenkörper 15 weist einen Teilabschnitt 15' und einen Teilabschnitt 15'' auf. Der Teilabschnitt 15'' ist aus einem thermoplastischen Elstomer gebildet, während der Teilabschnitt 15' aus einem üblichen Kunststoff oder auch einem Schaumkunststoff, der jedoch vergleichsweise hart ist, gespritzt ist. Beispielsweise kann dieser erste Teilabschnitt zunächst durch einen Schieber verschlossen sein und nach Spritzen des zweiten Teilabschnittes 15'' der Schieber zurückgezogen werden zur Bespritzung dieses Teilabschnittes.

Wie weiter ersichtlich ist in dem zweiten Teilabschnitt 15'' eine Scherstelle 4 ausgebildet, die innerhalb der Kavität liegt. Daran anschließend bildet sich der Hohlraum aus, der beim konkreten glatten Körper 15 die Dichtlippe als flexibles Teil bildet.

Auch in dem Bereich 15''' ist wie ersichtlich ein Hohlraum abgebildet. Bei dem dargestellten Ausführungsbeispiel bildet auch der aus einem härteren Kunststoff gebildete Teil 15' des Kunststoffteiles, hier des Klappenkörpers, einen Teil der Scherstelle 4 aus. Ein weiterer Teil ist durch das Werkzeug 2 gebildet.

In Fig. 7 ist eine Draufsicht auf den Gegenstand gemäß Fig. 6, mit strichlinierter Darstellung des innerhalb der Form befindlichen Teiles, zu erkennen. Hierbei ist insbesondere zu erkennen, daß der erste Teilabschnitt 15'' in Strömungsrichtung vor der Scherstelle 4 hier als Teilabschnitt 15''' gekennzeichnet, als auf den Teilabschnitt 15' aufgesetzter Strang gebildet ist.

Alternativ kann eine Materialeindüsung auch über eine Injektornadel im Bereich 15'' erfolgen.

Bei dem in den Fig. 8 und 9 dargestellten, im Kunststoffspritzverfahren hergestellten Kunststoffteil 17 handelt es sich gleichfalls um eine solches Kunststoffteil, das einen Teilbereich 17' aufweist, der aus härterem Kunststoff besteht und einen Teilbereich 17'', der aus einem weicheren Kunststoff, hier einem thermolastischen Elastomer besteht und einen im Gasinnendruckverfahren hergestellten Hohlraum aufweist.

Während in dem Teil 17' bei 18 der Anspritzpunkt bspw. gewählt ist, ist der Anspritzpunkt und zugleich auch die Gasinjektion bezüglich des Teiles 17'' bei 19 gewählt. Auch hier ist ein Teil der Scherstelle 4 durch den Materialabschnitt 17''' des Teiles 17, in härterem Kunststoff, gebildet.

Wesentlich ist des weiteren, daß das Teil 17'', welches den Hohlraum aufweist und spritztechnisch an das Teil 17' angebunden ist, freikragend von dem Teil 17' vorsteht.

Es handelt sich also um ein Kunststoffteil 17, das einen härteren Tellerbereich 17' aufweist und einen hiervon beim Ausführungsbeispiel etwa entlang einer Radialen abstehenden weicheren Hohlraumteil 17".

## Patentansprüche

1. Verfahren zur Herstellung eines einen im wesentlichen abgeschlossenen Hohlraum aufweisenden Kunststoffteiles im Spritzgießverfahren, wobei durch mindestens eine Düse eine druckbeaufschlagte, fließfähige Kunststoffschmelze in das Innere eines Formhohlraums eingespritzt wird und weiter eine Eindüsung eines Fluids, insbesondere eines Gases, zur Ausbildung des Hohlraums in dem Kunststoffteil vorgenommen wird, wobei darüber hinaus die Kunststoffschmelze nach der Düse zunächst einen Anguß durchsetzt, **dadurch gekennzeichnet, dass** die aus einem thermoplastischen Elastomer bestehende Kunststoffschmelze nachfolgend zu dem Anguß durch eine Scherstelle geleitet wird, unter einer Querschnittsreduktion im Bereich von 1:20 bis 1:50 bezogen auf einen größten Querschnitt des Anguß, und daß die Eindüsung des Fluids derart vorgenommen wird, dass eine gemeinsame Durchsetzung der Scherstelle von Kunststoffschmelze und Fluid erfolgt.

2. Verfahren nach Anspruch 1, **dadurch gekennzeichnet, dass** das Fluid im Bereich einer Maschinendüse eingedüst wird.

3. Verfahren nach Anspruch 1, **dadurch gekennzeichnet, dass** das Fluid über eine Werkzeugdüse eingedüst wird.

4. Verfahren nach einem der Ansprüche 1 bis 3, **dadurch gekennzeichnet, dass** die Eindüsung des Fluids und die Einspritzung der Kunststoffschmelze etwa gleichzeitig erfolgen.

5. Verfahren nach einem der Ansprüche 1 bis 3, **dadurch gekennzeichnet, dass** die Eindüsung des Fluids vorlaufend zu der Einspritzung der Kunststoffschmelze vorgenommen wird.

6. Verfahren nach einem der Ansprüche 1 bis 3, **dadurch gekennzeichnet, dass** zunächst die Kunststoffschmelze und sodann das Fluid eingedüst werden, wobei jedoch die Kunststoffschmelze den Formhohlraum noch nicht zu einem wesentlichen Ausmaß erreicht hat.

7. Vorrichtung zur Herstellung eines einen abgeschlossenen Hohlraum aufweisenden, und aus einem thermoplastischen Elastomer bestehenden Kunststoffteiles im Spritzgießverfahren, wobei zur Ausbildung des Hohlraumes ein Fluid eindüsbar ist, mit einer Maschinendüse, einem Angußhohlraum (3) und einer Angußmündung (5), **dadurch gekennzeichnet, dass** nachgeordnet zu dem Anguß eine Scherstelle ausgebildet ist, mit einer Querschnittsreduktion im Bereich 1:20 bis 1:50 bezogen auf einen größten Querschnitt des Anguß, und dass in Spritzrichtung vor der Scherstelle (4) eine Fluiddüse angeordnet ist.

8. Vorrichtung nach Anspruch 7, **dadurch gekennzeichnet, dass** die Scherstelle (4) in der Kavität angeordnet ist.

9. Vorrichtung nach Anspruch 8, **dadurch gekennzeichnet, dass** die Scherstelle (4) in der Kavität am Übergang zwischen einem ohne Hohlraum gespritzten Teilabschnitt (15') und einem mit Hohlraum ausgebildeten Teilabschnitt (15") des Kunststoffteiles angeordnet ist.

10. Vorrichtung nach einem der Ansprüche 7 bis 9, **dadurch gekennzeichnet, dass** die Fluiddüse in die Kavität mündend angeordnet ist.

11. Vorrichtung nach einem der Ansprüche 7 bis 10, **dadurch gekennzeichnet, dass** die Maschinendüse die Fluiddüse ist.

12. Vorrichtung nach einem der Ansprüche 7 bis 10 oder insbesondere danach, **dadurch gekennzeichnet, dass** die Werkzeugdüse die Fluiddüse ist.

13. Vorrichtung nach einem der Ansprüche 7 bis 12, **dadurch gekennzeichnet, dass** zur Einspritzung ein Kaltkanal ausgebildet ist.

14. Vorrichtung nach einem der Ansprüche 7 bis 12, **dadurch gekennzeichnet, dass** zur Einspritzung ein Heißkanal ausgebildet ist.

## Claims

1. Method for producing a plastic part having a substantially closed cavity by the injection-moulding process, a pressurized, flowable polymer melt being injected through at least one nozzle into the interior of a mould cavity and, furthermore, injection of a fluid, in particular a gas, being performed to form the cavity in the plastic part, the polymer melt additionally passing in the first instance through a sprue downstream of the nozzle, **characterized in that**, following the sprue, the polymer melt comprising a thermoplastic elastomer is directed through a shearing point,' with a cross-sectional reduction in the range of 1:20 to 1:50 with respect to a maximum cross-section of the sprue, and **in that** the injection of the fluid is performed in such a way that the polymer melt and the fluid pass jointly through the shearing point.

2. Method according to Claim 1, **characterized in that** the fluid is injected in the region of a machine nozzle.

3. Method according to Claim 1, **characterized in that** the fluid is injected via a mould nozzle.

4. Method according to one of Claims 1 to 3, **characterized in that** the injection of the fluid and the injection of the polymer melt take place approximately simultaneously.

5. Method according to one of Claims 1 to 3, **characterized in that** the injection of the fluid is performed prior to the injection of the polymer melt.

6. Method according to one of Claims 1 to 3, **characterized in that** the polymer melt is injected first and then the fluid, although the polymer melt has by then not reached the mould cavity to a significant extent.

7. Device for producing a plastic part having a closed cavity and consisting of a thermoplastic elastomer by the injection-moulding process, a fluid being able to be injected to form the cavity, with a machine nozzle, a sprue cavity (3) and a sprue mouth (5), **characterized in that** downstream of the sprue there is formed a shearing point, with a cross-sectional reduction in the range of 1:20 to 1:50 with respect to a maximum cross-section of the sprue, and **in that** disposed upstream of the shearing point (4) in the direction of injection there is a fluid nozzle.

8. Device according to Claim 7, **characterized in that** the shearing point (4) is disposed in the cavity.

9. Device according to Claim 8, **characterized in that** the shearing point (4) is disposed in the cavity at the transition between a portion (15') of the plastic part injection-moulded without a cavity and a portion (15") of the plastic part formed with a cavity.

10. Device according to one of Claims 7 to 9, **characterized in that** the fluid nozzle is disposed such that it opens into the cavity.

11. Device according to one of Claims 7 to 10, **characterized in that** the machine nozzle is the fluid nozzle.

12. Device according to one of Claims 7 to 10 or in particular according thereto, **characterized in that** the mould nozzle is the fluid nozzle.

13. Device according to one of Claims 7 to 12, **characterized in that** a cold runner is formed for the melt injection.

14. Device according to one of Claims 7 to 12, **characterized in that** a hot runner is formed for the melt injection.

## Revendications

1. Procédé de fabrication, par moulage par injection, d'une pièce en matière plastique présentant un espace creux sensiblement fermé, procédé dans lequel on injecte, à l'intérieur d'un espace creux de moulage, de la matière plastique en fusion, capable de s'écouler et soumise à la pression, par l'intermédiaire d'au moins une buse, et ensuite on procède à l'introduction par une buse d'un fluide, en particulier d'un gaz, pour réaliser l'espace creux dans la pièce en matière plastique, la matière plastique en fusion traversant en outre, après la buse, d'abord un point d'injection, **caractérisé en ce que** la matière plastique en fusion se composant d'un élastomère thermoplastique est conduite, après le point d'injection, à travers un emplacement de cisaillement, avec une réduction de section transversale de l'ordre de 1:20 à 1:50 par rapport à la plus grande section transversale du point d'injection, et **en ce que** l'introduction du fluide par une buse est réalisée de sorte à obtenir une traversée commune de l'emplacement de cisaillement par la matière plastique en fusion et par le fluide.

2. Procédé selon la revendication 1, **caractérisé en ce que** le fluide est introduit par une buse dans la zone d'une buse de la machine.

3. Procédé selon la revendication 1, **caractérisé en ce que** le fluide est introduit par une buse d'outil.

4. Procédé selon l'une des revendications 1 à 3, **caractérisé en ce que** l'introduction par une buse du fluide et l'injection de la matière plastique en fusion sont réalisées de façon sensiblement simultanée.

5. Procédé selon l'une des revendications 1 à 3, **caractérisé en ce que** l'on procède à l'introduction par une buse du fluide, préalablement à l'injection de la matière plastique en fusion.

6. Procédé selon l'une des revendications 1 à 3, **caractérisé en ce qu'**on introduit par une buse d'abord la matière plastique en fusion et ensuite le fluide, la matière plastique en fusion n'ayant cependant pas encore atteint des dimensions importantes dans l'espace creux de moulage.

7. Dispositif pour la fabrication par moulage par injection d'une pièce en matière plastique se composant d'un élastomère thermoplastique, et présentant un espace creux fermé, dans lequel dispositif, pour réaliser l'espace creux, un fluide est susceptible d'être injecté par une buse, le dispositif comprenant une buse de la machine, un espace creux (3) du point d'injection et un débouché (5) du point d'injection, **caractérisé en ce qu'**est réalisé un emplacement de cisaillement, disposé en aval (après) du point d'injection et qui présente une réduction de section transversale de l'ordre de 1:20 à 1:50 rapportée à la plus grande section transversale du point d'injection, et **en ce que** dans la direction d'injection, est disposée une tuyère de fluide avant l'emplacement (4) de cisaillement.

8. Dispositif selon la revendication 7, **caractérisé en ce que** l'emplacement de cisaillement 4 est disposé dans la cavité.

9. Dispositif selon la revendication 8, **caractérisé en ce que** l'emplacement de cisaillement (4) est disposé dans la cavité à la transition entre un tronçon partiel (15') injecté sans espace creux et un tronçon partiel (15") réalisé avec un espace creux, de la pièce en matière plastique.

10. Dispositif selon l'une des revendications 7 à 9, **caractérisé en ce que** la buse de fluide est disposée débouchant dans la cavité.

11. Dispositif selon l'une des revendications 7 à 10, **caractérisé en ce que** la buse de la machine est la buse de fluide.

12. Dispositif selon l'une des revendications 7 à 10 ou en particulier selon,
**caractérisé en ce que** la buse d'outil est la buse de fluide.

13. Dispositif selon l'une des revendications 7 à 12, **caractérisé en ce que**, pour l'injection, est réalisé un canal froid.

14. Dispositif selon l'une des revendications 7 à 12, **caractérisé en ce que**, pour l'injection, est réalisé un canal chaud.
